# EUROPEAN PATENT SPECIFICATION

(11) **EP 0 842 392 B1**
(45) Date of publication and mention of the grant of the patent: **17.12.2003**
(21) Application number: 96924680.0
(22) Date of filing: 22.07.1996
(51) Int. Cl.: G01B 7/00, G01P 3/488, G01D 5/14

(54) **GEAR TOOTH SENSOR WITH IMPROVED RESOLUTION AND STABILITY**
ZAHNRADBEWEGUNGSSENSOR MIT VERBESSERTER STABILITÄT UND AUFLÖSUNG
CAPTEUR DE MOUVEMENT DE DENT DE ROUE, A DEFINITION ET STABILITE AMELIOREES

(30) Priority: 02.08.1995 US 510419
(43) Date of publication of application: 20.05.1998
(73) Proprietor: American Electronic Components, Inc., Elkhart, IN 46515 (US)
(72) Inventor: WOLF, Ronald, J., Elkhart, IN 46515 (US); HEDEEN, Larry, Howe, IN 46746 (US)
(74) Representative: Lieck, Hans-Peter, Dipl.-Ing.
(86) International application number: PCT/US96/12102
(87) International publication number: WO 97/006404

(56) References cited:
- EP-A- 0 387 781
- US-A- 3 900 814
- US-A- 4 481 469
- US-A- 4 626 781
- US-A- 4 700 133
- US-A- 4 745 363
- US-A- 4 859 941
- US-A- 5 264 792
- US-A- 5 341 097
- US-A- 5 444 369
- US-A- 5 444 370
- US-A- 5 469 052
- US-A- 5 510 708
- PATENT ABSTRACTS OF JAPAN vol. 018, no. 510 (P-1804), 26 September 1994 (1994-09-26) & JP 06 174735 A (ASAHI CHEM IND CO LTD), 24 June 1994 (1994-06-24)
- PATENT ABSTRACTS OF JAPAN vol. 018, no. 333 (P-1759), 23 June 1994 (1994-06-23) & JP 06 082465 A (YAZAKI CORP), 22 March 1994 (1994-03-22)

## Description

The present invention relates to a ferrous target sensor according to the pre-characterizing portion of claim 1.

Ferrous target sensors, particularly in the form of gear tooth sensors, are generally known in the art. They normally include a magnetic flux responsive element, such as a Hall effect element, in addition to a magnet and, possibly, one or more flux concentrators, all rigidly disposed adjacent one another. The configuration of such a sensor as it is disclosed in US-A-4,970,463, is such that an axis perpendicular to opposing North and South pole faces of the magnet, hereinafter called a "magnetic axis", is generally perpendicular to the path of travel of the gear tooth on the target wheel at an instant when the gear is adjacent the magnet. With such a configuration, the sensitivity of the sensor is relatively low, requiring relatively large ferrous targets for proper operation, not suitable in various compact applications, such as the sensing of rotation of an automotive cam shaft drive wheel. More particularly, in relatively compact applications, the distance between gullets (i.e. the distance between adjacent teeth on a ferrous target wheel) is often limited to, for example, 6 mm or less. Thus, a sensor as disclosed in US-A-4,970,463 is not capable of sensing ferrous targets with such spacing between gullets on the ferrous target wheel.

In such compact applications, other known gear tooth sensors, such as disclosed, e.g., in US-A-4,859,941, normally use a differential input magnetic flux sensitive element, such as an Allegro model *No*. 3056 integrated circuit (IC). Such differential ICs are normally about twice the size of a single input IC, such as Allegro model Nos. 3131 or 3134 single input ICs as normally used with gear tooth sensors of the type disclosed in US-A-4,970,463. Additionally, the cost of a differential IC is significantly higher than that of a single input IC.

In addition to being more expensive, there are problems with sensors utilizing such differential Hall effect ICs. For example, the Allegro model No. 3056 is normally formed on a relatively large die with two Hall effect sensitive arrays disposed adjacent to opposing ends of the die, for example, spaced 2 mm apart from center line to center line. The differential ICs use two Hall effect elements which can experience about twice the temperature drift errors as an IC with a single Hall effect element.

There are other problems with known gear tooth sensors. In particular, known gear tooth sensors normally operate at a relatively large tolerance relative to the physical position of the gear tooth. For example, in an application where the sensor is used to indicate the passage of a target edge, such known sensors normally will not operate exactly at the target edge, but perhaps several degrees before or after the passing of the target edge, for example ±2°. In many applications such a relatively wide tolerance is unacceptable. In some applications, such as with a cam shaft sensor, narrower tolerances may be required, such as plus or minus 1°. In such applications, such known gear tooth sensors would not be useful.

Another known problem with gear tooth sensors is that each gear tooth sensor is normally configured for a single application and is not adapted to be used in any other application.

For example, as discussed above, the gear tooth sensor disclosed in US-A-4,970,463 is adapted to be used in only one application where the magnetic axis is generally perpendicular to the travelling direction of the ferrous target. As such, various known gear tooth sensors, such as that one disclosed in US-A-4,970,463, have only limited utility. Thus, various customers and original equipment manufacturers are required to purchase different sensors for each of their various applications.

It is, therefore, the object of the present invention to provide a ferrous target sensor suitable for use in various and relatively compact applications which can, nevertheless, be utilized with relatively small ferrous targets, which is inexpensive to manufacture and which has relatively narrow tolerances of the operate point relative to the passing of a gear tooth, particularly temperature tolerances.

This multiple object is achieved, according to the invention, by the ferrous target sensor as defined in claim 1. The dependent claims, additionally, define advantageous embodiments.

In the following, the invention will be explained in more detail in connection with two specific embodiments, taking reference to the attached drawings. Therein
Fig. 1 is a schematic elevational view of a first embodiment of the invention,
Fig. 2 is a plan view of the same embodiment,
Fig. 3 is a view similar to Fig. 1 but additionally showing a ferrous target wheel,
Fig. 4 is an elevational view of another embodiment of the invention, and
Fig. 5 is a view similar to Fig. 1 yet showing the magnetic flux lines and not showing any flux concentrator.

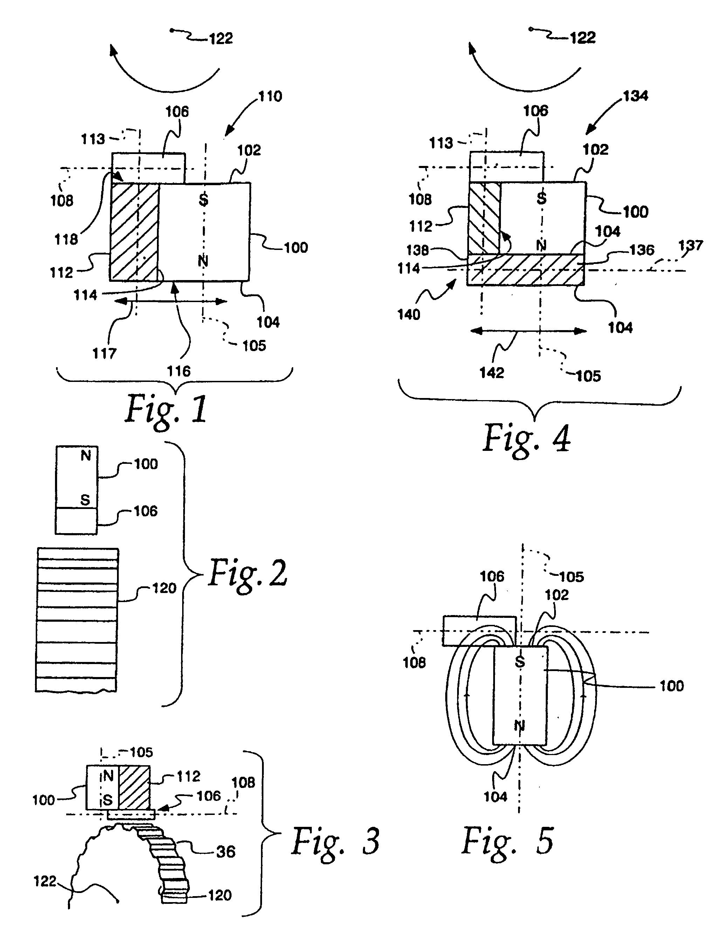

In each embodiment a magnetic flux responsive element 106 having a predetermined sensing plane 108, such as a Hall effect device, is disposed relative to a magnet 100 such that, in a non-excited state (i.e. no gear tooth present), the sensing plane 108 is disposed in a field essentially below the required Gauss level for turn-on. The magnet 100 has opposing pole faces 102 and 104 defining a magnetic axis 105 therebetween. As shown in Fig. 5, the magnetic flux emanates from a North pole face 104 and returns to a South pole face 102.

The magnetic flux responsive element 106 is positioned such that its sensing plane 108 is generally perpendicular to the magnetic axis 105, and a portion of the magnetic flux responsive element 106 partially overlaps one or the other of the North and South pole faces 104 and 102, respectively. The amount of overlap is determined by adjustment.

With the configuration as illustrated in any of the Figures 1 to 5, the sensing plane 108 of the magnetic flux responsive element 106 is generally subject to a flux level less than the turn-on level when no target is present, even though the magnetic flux responsive element partially overlaps one of the pole faces 102 and 104. More particularly, the vertical components of magnetic flux at the location generally illustrated in Fig. 5 of the magnetic flux responsive element 106 are less than when a target is present. Indeed, during a condition when no target such as a gear tooth 36 (Fig. 3) is present, the sensing plane 108 of the magnetic flux responsive element 106 is primarily subjected to horizontal components of the magnetic flux lines. By so positioning the magnetic flux responsive element 106, the presence of a ferrous target, such as a gear tooth 36, will shunt the flux lines in a manner to cause the sensing plane 108 of the flux responsive element 106 to be subject to substantial vertical components relative to the sensing plane 108.

In the following, two embodiments of the invention following the general principles of operation of Fig. 5 are contemplated in more detail. The first embodiment, illustrated in Figures 1 - 3 and generally identified with the reference numeral 110, is similar to Fig. 5 and includes a magnet 100 having opposing North and South pole faces 104 and 102 defining a magnetic axis 105 therebetween. A magnetic flux responsive element 106 is provided such that its sensing plane 108 is disposed generally perpendicularly to the magnetic axis 105 and so that the flux responsive element 106 partially overlaps one or the other of the respective North and South pole face 104 and 102. A flux concentrator 112 formed from, for example, a soft magnetic material, is rigidly disposed relative to a lateral surface 114 of the magnet 100. The flux concentrator 112 may be formed in a generally rectangular shape defining a longitudinal axis 113 and having a rectangular cross-section.

The combination of the flux concentrator 112 and the magnet 100 forms a sub-assembly 116. The magnetic flux responsive element 106 is disposed to at least partially overlap a top surface 118 of the flux concentrator 112 as well as one of the opposing pole faces 102 and 104 of the magnet 100.

The assembly 110 so designed is then disposed relative to a ferrous target, such as a gear tooth wheel 120 (Figures 2 and 3) so that the magnetic axis 105 and the longitudinal axis 113 of the flux concentrator 112 are generally perpendicular to the axis of rotation 122 of the gear tooth wheel 120 and the sensing plane 108 of the flux responsive element 106 is generally parallel to the axis of rotation 122. Thereupon, the sub-assembly 116 is moved in the direction of arrow 117 for adjustment.

Another embodiment, identified with the reference numeral 134, is illustrated in Fig. 4. The embodiment 134 is similar to the embodiment 110 of the Figures 1 - 3 with the exception that it includes an additional flux concentrator, 136. The flux concentrator 136 is similar to the flux concentrator 112 except that it is disposed adjacent one pole face, that is the pole face 104 opposite the pole face 102 which is partially overlapped by the flux responsive element 106. In the example shown in Fig. 4, the flux concentrator 136 is disposed adjacent the North pole face 104 and extends beyond the lateral surface 114 of the magnet 100 to at least partially overlay a bottom surface 138 of the flux concentrator 112. In such a configuration, a longitudinal axis 137 of the flux concentrator 136 is generally parallel to the sensing plane 108 and a plane including the axis of rotation 122 of the ferrous target wheel 120 while being generally perpendicular to the magnetic axis 105 and the longitudinal axis 113 of the flux concentrator 112.

In this embodiment, the magnet 100 and the flux concentrators 112 and 136 form a sub-assembly 140. The sub-assembly 140 can be moved in the direction of arrow 142 relative to the flux responsive element 106 to adjust the operate and release points of the sensor.

It ought to be observed that the sensors illustrated in the Figures 1 to 5 are zero speed sensors. Moreover, they are essentially omnidirectional in the meaning of that they can sense a ferrous target, such as a gear tooth, in any direction and at zero speed on power-up. Further, the sensors are responsive to gear teeth having smaller gullets. More particularly, these sensors are responsive to gear teeth having gullets as small as 2 mm. Such a characteristic enables the sensors to respond to relatively smaller ferrous target wheels which, in turn, can be used in fairly compact applications.

For the embodiments illustrated in the Figures 1 to 4, examplary dimensions of the flux concentrators 112 and 136 are about 4.3 x 5 x 2 mm. The magnet 100 may be a rare earth magnet, such as a samarium cobalt or neodymium magnet formed as a 4 mm cube or 4 x 4 x 6 mm block having a typical magnetic power product of about 26 million Gauss-Oersteds or even less. The magnetic sensing element 106 may be a single input Hall effect IC as discussed above. In addition, an MRE as well as any of the other magnetic flux responsive elements as disclosed in US-A-4,970,463 can be used. In any case, the flux responsive element is positioned such that its sensing plane extends generally perpendicular to the magnetic axis, as discussed above.

## Claims

1. A ferrous target sensor for sensing at least one ferrous target (36), such as a gear tooth, on a ferrous target wheel (120), the sensor comprising a magnet (100), a flux responsive element (106) having a predetermined sensing plane (108) for sensing magnetic flux, and a flux concentrator (112), having a longitudinal axis (113), said magnet (100) having opposing North and South pole faces (102, 104) defining a magnetic axis (105) therebetween and having opposing lateral faces (114) between said opposing North and South pole faces (102, 104),
**characterized**
**in that** said flux concentrator (112) is disposed adjacent to one of said opposing lateral surfaces (114) of said magnet (100) with said longitudinal axis (113) parallel to said magnetic axis (105),
**in that** an end surface (118) of said flux concentrator (112) is coplanar with one (102) of said opposing pole faces (102, 104),
**in that** the sensing plane (108) of said magnetic flux responsive element (106) is generally perpendicular to said magnetic axis (105), and
**in that** said flux responsive element (106) is disposed to at least partially overlap said end surface (118) of said flux concentrator (112) as well as to partially overlap the magnetic pole face coplanar with said end surface (118).

2. The sensor of claim 1, wherein said magnetic flux responsive element (106) is a Hall effect integrated circuit.

3. The sensor of claim 1 or 2, wherein said magnetic axis (105) is generally perpendicular to the rotational axis (102) of said ferrous target wheel (120).

4. The sensor of any one of the preceding claims, further including adjusting means (140) for adjusting the sensitivity of said flux responsive element (106).

5. The sensor of claim 4, wherein said adjusting means (140) comprises said flux responsive element (106) being adjustable with respect to the assembly of said flux concentrator (112) and said magnet (100).

6. The sensor of claim 5, wherein said flux responsive element (106) is adjustable in a plane substantially parallel to said adjacent pole face (102).

7. The sensor of claim 6, wherein said flux concentrator (112) is of a generally rectangular shape.

8. The sensor of claim 7, wherein the length of said flux concentrator (112) is selected to substantially correspond to the distance between the opposing pole faces (102, 104).

9. The sensor of claim 8, wherein a second flux concentrator (136) is attached to the pole face (104) opposite said magnetic flux responsive element (106), together with said first flux concentrator (112) to define an L-shaped flux concentrator.

10. The sensor of claim 9, wherein said second flux concentrator, too, is generally rectangular in shape.

11. The sensor of claim 10, wherein the length of said second flux concentrator is selected to coincide with the distance between the outward lateral surface (114) of the magnet (100) and the outward lateral surface of said first flux concentrator (112).

## Patentansprüche

1. Sensor für eisenhaltige Ziele, zum Abfühlen wenigstens eines eisenhaltigen Zieles (36), wie zum Beispiel eines Zahnradzahnes, auf einem eisenhaltigen Zielrad (120), mit einem Magnet (100), einem auf Fluß ansprechenden Element (106) mit einer vorgegebenen Abfühlebene (108) zum Abfühlen von magnetischem Fluß, und einem Flußkonzentrator (112) mit einer Längsachse (113), wobei der Magnet (100) gegenüberliegende Nord- und Südpolflächen (102, 104) aufweist, die zwischen sich eine magnetische Achse (105) definieren und gegenüberliegende Seitenflächen (114) zwischen den gegenüberliegenden Nord- und Südpolflächen (102, 104) aufweisen,
**dadurch gekennzeichnet,**
**daß** der Flußkonzentrator (112) nahe einer der gegenüberliegenden Seitenflächen (114) des Magnets (100) angeordnet ist, wobei die Längsachse (113) parallel zur magnetischen Achse (105) verläuft,
**daß** eine Endfläche (118) des Flußkonzentrators (112) koplanar mit einer (102) der gegenüberliegenden Polflächen (102, 104) ist,
**daß** die Abfühlebene (108) des auf magnetischen Fluß ansprechenden Elements (106) allgemein senkrecht zu der magnetischen Achse (105) verläuft, und
**daß** das auf Fluß ansprechende Element (106) so angeordnet ist, daß es wenigstens teilweise die Endfläche (118) des Flußkonzentrators (112) überlappt sowie teilweise die magnetische Polfläche, die koplanar mit der Endfläche (118) ist, überlappt.

2. Sensor nach Anspruch 1, bei dem das auf magnetischen Fluß ansprechende Element (106) ein integrierter Halleffekt-Schaltkreis ist.

3. Sensor nach Anspruch 1 oder 2, bei dem die magnetische Achse (105) allgemein senkrecht zu der Drehachse (102) des eisenhaltigen Zielrades (120) verläuft.

4. Sensor nach einem der vorhergehenden Ansprüche, ferner mit Einstellmitteln (140) zum Einstellen der Empfindlichkeit des auf Fluß ansprechenden Elements (106).

5. Sensor nach Anspruch 4, bei dem die Einstellmittel (140) beinhalten, daß das auf Fluß ansprechende Element (106) einstellbar ist in bezug auf die den Flußkonzentrator (112) und dem Magnet (100) aufweisende Baugruppe.

6. Sensor nach Anspruch 5, bei dem das auf Fluß ansprechende Element (106) einstellbar ist in einer Ebene, die im wesentlichen parallel zu der benachbarten Polfläche (102) verläuft.

7. Sensor nach Anspruch 6, bei dem der Flußkonzentrator (112) eine allgemein rechteckige Form aufweist.

8. Sensor nach Anspruch 7, bei dem die Länge des Flußkonzentrators (112) so gewählt ist, daß sie im wesentlichen dem Abstand zwischen den gegenüberliegenden Polflächen (102, 104) entspricht.

9. Sensor nach Anspruch 8, bei dem ein zweiter Flußkonzentrator (136) an der Polfläche (104) befestigt ist, die dem auf magnetischen Fluß ansprechenden Element (106) gegenüberliegt, zusammen mit dem ersten Flußkonzentrator (112), um einen L-förmigen Flußkonzentrator zu bilden.

10. Sensor nach Anspruch 9, bei dem der zweite Flußkonzentrator ebenfalls eine allgemein rechteckige Form aufweist.

11. Sensor nach Anspruch 10, bei dem die Länge des zweiten Flußkonzentrators so gewählt ist, daß sie mit dem Abstand zwischen der äußeren Seitenfläche (114) des Magnets (100) und der äußeren Seitenfläche des ersten Flußkonzentrators (112) übereinstimmt.

## Revendications

1. Détecteur de cible ferreuse destiné à détecter au moins une cible ferreuse (36) telle qu'une dent d'engrenage, sur une roue formant cible ferreuse (120), le détecteur comprenant un aimant (100), un élément sensible au flux (106) ayant un plan de détection prédéterminé (108), destiné à détecter un flux magnétique, et un concentrateur de flux (112) ayant un axe longitudinal (113), ledit aimant (100) ayant des faces polaires opposées Nord et Sud (102, 104) qui définissent entre elles un axe magnétique (105) et ayant des faces latérales opposées (114) entre lesdites faces polaires opposées Nord et Sud (102, 104),
**caractérisé**
**en ce que** ledit concentrateur de flux (112) est disposé adjacent à une desdites surfaces latérales opposées (114) dudit aimant (100), avec ledit axe longitudinal (113) parallèle audit axe magnétique (105),
**en ce qu'**une surface d'extrémité (118) dudit concentrateur de flux (112) est coplanaire avec une (102) desdites faces polaires opposées (102, 104),
**en ce que** ledit plan de détection (108) dudit élément sensible au flux magnétique (106) est de façon générale perpendiculaire audit axe magnétique (105), et
**en ce que** ledit élément sensible au flux (106) est disposé de manière à recouvrir au moins partiellement ladite surface d'extrémité (118) dudit concentrateur de flux (112) ainsi qu'à recouvrir partiellement la face polaire magnétique qui est coplanaire avec ladite surface d'extrémité (118).

2. Détecteur selon la revendication 1, dans lequel ledit élément sensible au flux magnétique (106) est un circuit intégré à effet Hall.

3. Détecteur selon la revendication 1 ou 2, dans lequel ledit axe magnétique (105) est de façon générale perpendiculaire à l'axe de rotation (102) de ladite roue formant cible ferreuse (120).

4. Détecteur selon une quelconque des revendications précédentes, comprenant en outre des moyens de réglage (140) destinés à régler la sensibilité dudit élément sensible au flux (106).

5. Détecteur selon la revendication 4, dans lequel ledit moyen de réglage (140) comprend ledit élément sensible au flux (106) qui est réglable par rapport à l'ensemble dudit concentrateur de flux (112) et dudit aimant (100).

6. Détecteur selon la revendication 5, dans lequel ledit élément sensible au flux (106) peut être réglé dans un plan sensiblement parallèle à ladite face polaire adjacente (102).

7. Détecteur selon la revendication 6, dans lequel ledit concentrateur de flux (112) est d'une forme générale rectangulaire.

8. Détecteur selon la revendication 7, dans lequel la longueur dudit concentrateur de flux (112) est choisie pour correspondre sensiblement à la distance entre les faces polaires opposées (102, 104).

9. Détecteur selon la revendication 8, dans lequel un deuxième concentrateur de flux (136) est attaché à la face polaire (104) à l' opposé dudit élément sensible au flux magnétique (106), pour définir avec ledit premier concentrateur de flux (112) un concentrateur de flux en forme de L.

10. Détecteur selon la revendication 9, dans lequel ledit deuxième concentrateur de flux est lui aussi de forme générale rectangulaire.

11. Détecteur selon la revendication 10, dans lequel la longueur dudit deuxième concentrateur de flux est choisie pour coïncider avec la distance entre la surface latérale extérieure (114) de l'aimant (100) et la surface latérale extérieure dudit premier concentrateur de flux (112).
